# EUROPEAN PATENT APPLICATION

(11) **EP 4 563 374 A1**
(43) Date of publication of application: **04.06.2025**
(21) Application number: 23893403.8
(22) Date of filing: 22.09.2023
(51) Int. Cl.: B60H 1/14

(54) **METHOD AND APPARATUS FOR CONTROLLING ACTIVE EFFICIENCY-REDUCTION HEATING OF DRIVING ELECTRIC MOTOR, AND VEHICLE AND MEDIUM**

(30) Priority: 22.11.2022 CN 202211469435
(71) Applicant: Deepal Automobile Technology Co., Ltd., Chongqing 401133 (CN)
(72) Inventor: NIE, Dachen, Chongqing 401135 (CN); CHEN, Jian, Chongqing 401135 (CN); MOU, Xiaolong, Chongqing 401135 (CN); CHEN, Yang, Chongqing 401135 (CN); LIU, Li, Chongqing 401135 (CN)
(74) Representative: DREISS Patentanwälte PartG mbB
(86) International application number: PCT/CN2023/120811
(87) International publication number: WO 2024/109310

(57) **Abstract**

The present application relates to a method and apparatus for controlling active efficiency-reduction heating of a driving electric motor, and a vehicle and a medium. The method comprises: determining whether the present electric driving system has received a preset efficiency-reduction heating instruction, which may be a parking standby efficiency-reduction heating instruction or an in-drive-state efficiency-reduction heating instruction; when the present electric driving system has received the parking standby efficiency-reduction heating instruction and is in a preset available state, converting a preset mathematical model for an electric motor to a target rotary coordinate system, performing calculation according to a first current in a rotor magnetic field direction and a second current in a direction perpendicular to the rotor magnetic field direction, so as to obtain an active heating power, and performing active heating; and when the present electric driving system has received the in-drive-state efficiency-reduction heating instruction and is in the preset available state, inputting the present table look-up rotation speed into a preset efficiency-reduction rotation speed amplification module to obtain a target amplification coefficient, performing calculation according to a target current obtained by means of the target amplification coefficient, so as to obtain a target heating power, and performing active heating. In this way, the problems of high costs, low levels of efficiency, etc., are solved, thereby improving the energy consumption level of a vehicle and the traveling experience.

## Description

### CROSS-REFERENCE TO RELATED APPLICATIONS

This application claims priority to Chinese Patent Applications No. 202211469435.1, filed on November 22, 2022, the entire contents of which are incorporated herein by reference.

### TECHNICAL FIELD

The present disclosure relates to the technical field of vehicles, and in particular, to an active efficiency-reduction heating control method and apparatus for a drive motor, a vehicle, and a medium.

### BACKGROUND

With the rapid development of the new energy vehicle industry, exploration of technologies on the three core electric systems, namely the electric control system, the electric drive system and the battery system, has gradually delved into more subdivided fields and scenarios. Systems such as the electric drive system and the battery system cooperate and complement with each other based on their unique physical characteristics, prompting emergence of numerous new technologies, and allowing for remarkable headway in performance of new energy vehicles in terms of energy consumption, efficiency, driving quality, and start-up characteristics under low-temperature environment.

In the related art, patent application no. CN202110838549.8, titled UNIFORM-TEMPERATURE COOLING WATERWAY ARCHITECTURE FOR ELECTRIC DRIVE SYSTEM AND BATTERY SYSTEM, AND VEHICLE, provides a uniform-temperature cooling waterway architecture for an electric drive system and a battery system, and a vehicle, aiming to solve the high energy consumption problem when maintaining temperatures of the electric drive system and the battery system. The waterway architecture includes an electric drive system cycle, a battery system cycle, an engine system cycle, and a cooling waterway. The electric drive system cycle is connected to two ends of the battery system cycle in series. The battery system cycle includes a heater. The engine system cycle is connected to two ends of a heater as well, allowing the heat of engine system to be transferred to the heater. The heater provides heat to the battery system. A shut-off valve is provided between the heater and the engine system. The cooling waterway is connected in parallel with the engine system, allowing the cooling waterway to cool the engine system. However, the system structure to which this technology is applied is complex, as a result, which leads to a significant increase in product costs.

Patent application number CN201822259210.9, titled DEFROSTING SYSTEM FOR EXTERNAL HEAT EXCHANGER, HEAT PUMP SYSTEM, AND VEHICLE, a defrosting system for an external heat exchanger includes a motor and a motor controller connected to the motor. The motor controller includes (1) a motor drive controller configured to control an output shaft of the motor to rotate and (2) a motor efficiency-reduction controller connected to the motor drive controller and configured to control the motor to reduce its driving efficiency to force the motor to increase its heat generation amount when the external heat exchanger needs to be defrosted. The motor is configured to transfer heat generated by itself to the external heat exchanger through a transfer medium in a motor cooling pipeline, thereby removing a frost layer at a surface of the external heat exchanger. In addition, a heat pump system and a vehicle are further provided. The vehicle includes the heat pump system. The heat pump system includes the above-described defrosting system for the external heat exchanger. However, from a hardware perspective, this technology involves two sets of controllers to deal with efficiency reduction and heating scenarios respectively, which increases control costs. In addition, from an application scenario perspective, this technology is merely used for defrosting, defogging, and passenger compartment heating, making its application scenarios undiversified and providing low heating power. From a control perspective, the motor efficiency reduction is mentioned conceptually, more advanced topics are not mentioned, such as the specific efficiency-reduction control method and how to ensure a driving capability and provide a good vehicle driving experience during hardware failure protection and efficiency reduction, yet these issues are not covered and are to be solved urgently.

### SUMMARY

The present disclosure provides an active efficiency-reduction heating control method and apparatus for a drive motor, a vehicle, and a medium, to solve problems such as high product costs and low control efficiency, thereby improving a vehicle energy consumption level and enhancing a friendly travel experience.

Embodiments of the first aspect of the present disclosure provide an active efficiency-reduction thermal management control method for a drive motor. The method includes: determining whether a current electric drive system receives a predetermined efficiency-reduction heating instruction, the predetermined efficiency-reduction heating instruction including a parking-standby efficiency-reduction heating instruction and a driving-state efficiency-reduction heating instruction; in response to the current electric drive system receiving the parking-standby efficiency-reduction heating instruction and the current electric drive system being in a predetermined available state, converting a predetermined motor mathematical model to a target rotation coordinate system, calculating active heating power based on the first current in a rotor magnetic field direction and on the second current in a direction perpendicular to the rotor magnetic field direction, and performing active heating according to the active heating power; and in response to the current electric drive system receiving the driving-state efficiency-reduction heating instruction and the current electric drive system being in the predetermined available state, inputting a current look-up table concerning rotational speed into a predetermined efficiency-reduction rotational speed amplification module to obtain a target amplification coefficient, calculating target heating power based on a target current obtained from the target amplification coefficient, and performing active heating according to the target heating power.

With the above technical innovation, the active efficiency reduction function and the heat generation may be successfully dealt with by a vehicle thermal management system as vehicle system needs, according to the embodiments of the present disclosure, which has a wide range of application scenarios, reduces the product cost, improves the vehicle energy consumption level and the friendly travel experience.

Further, the determining whether the current electric drive system receives the predetermined efficiency-reduction heating instruction, includes: obtaining a current rotational speed, a current torque, a current operation mode, a current motor stator temperature, a current motor rotor temperature, a current ambient temperature, and a current fault-diagnosis rank of the drive motor; identifying a current efficiency reduction scenario of the current electric drive system according to the current rotational speed, the current torque, and the current operation mode, and identifying a safety status of the current electric drive system according to the current motor stator temperature, the current motor rotor temperature, the current ambient temperature, and the current fault-diagnosis rank; and determining that the current electric drive system receives the parking-standby efficiency-reduction heating instruction in response to the current efficiency reduction scenario being a parking-standby state scenario and the safety status being a safe power inverting state, and determining that the current electric drive system receives the driving-state efficiency-reduction heating instruction in response to the current efficiency reduction scenario being a drivable state scenario and the safety status being the safe power inverting state.

With the above technical innovation, it is possible to accurately determine whether the electric drive system receives the predetermined efficiency-reduction heating instruction, to identify the type of the efficiency-reduction heating instruction, and to achieve the anticipated effective efficiency reduction.

Further, the identifying the current efficiency reduction scenario of the current electric drive system according to the current rotational speed, the current torque, and the current operation mode, includes: determining whether an absolute value of the current rotational speed is smaller than or equal to the first predetermined rotational speed, determining whether the current torque is zero, and determining whether the current operation mode is the first predetermined high-voltage standby mode; and identifying the current efficiency reduction scenario of the current electric drive system as the parking-standby state scenario in response to the absolute value of the current rotational speed being smaller than or equal to the predetermined rotational speed, the current torque being zero, and the current operation mode being the first predetermined high-voltage standby mode.

With the above technical innovation, it is possible to accurately identify whether the efficiency reduction scenario of the current electric drive system is the parking-standby state scenario or not, which is conducive to realization of heating current/power control in a parking-standby state.

Further, the identifying the current efficiency reduction scenario of the current electric drive system according to the current rotational speed, the current torque, and the current operation mode, further includes: determining whether the absolute value of the current rotational speed is greater than the second predetermined rotational speed, and whether the current operation mode is the second predetermined high-voltage standby mode; and identifying the current efficiency reduction scenario of the current electric drive system as the drivable state scenario in response to the absolute value of the current rotational speed being greater than the second predetermined rotational speed and the current operation mode being the second predetermined high-voltage standby mode.

With the above technical innovation, it is possible to accurately identify whether the efficiency reduction scenario of the current electric drive system is the drivable state scenario, which is conducive to realization of heating current/power control in a driving state.

Further, the identifying the safety status of the current electric drive system according to the current motor stator temperature, the current motor rotor temperature, the current ambient temperature, and the current fault-diagnosis rank, includes: determining whether the current motor stator temperature is smaller than or equal to the first predetermined temperature, whether the current motor rotor temperature is smaller than or equal to the second predetermined temperature, whether the current ambient temperature is smaller than or equal to a third predetermined temperature, and whether the current fault-diagnosis rank is smaller than or equal to a predetermined controller power inverting faulty state; and identifying the safety status of the current electric drive system as the safe power inverting state in response to the current motor stator temperature being smaller than or equal to the first predetermined temperature, the current rotor temperature being smaller than or equal to the second predetermined temperature, the current ambient temperature being smaller than or equal to the third predetermined temperature, and the current fault-diagnosis rank being smaller than or equal to the predetermined controller power inverting faulty state.

With the above technical innovation, it is possible to accurately identify whether the safety status of the current electric drive system is the safe power inverting state, ensuring that operation is performed in the safety mode.

Further, the method further includes, prior to the converting the predetermined motor mathematical model to the target rotation coordinate system: establishing the target rotation coordinate system on a drive motor rotor. The rotor magnetic field direction is taken as a direct axis, i.e., D axis, and a direction perpendicular to the rotor magnetic field direction is taken as a quadratic axis, i.e., Q axis .

With the above technical innovation, the conversion of the motor mathematical model to the target rotation coordinate system can be realized, and vice versa, thereby achieving active efficiency-reduction heating control.

Embodiments of the second aspect of the present disclosure further provide an active efficiency-reduction heating control apparatus for a drive motor. The apparatus includes: a determination module configured to determine whether the current electric drive system receives a predetermined efficiency-reduction heating instruction, the predetermined efficiency-reduction heating instruction including a parking-standby efficiency-reduction heating instruction and a driving-state efficiency-reduction heating instruction; a first control module configured to convert a predetermined motor mathematical model to a target rotation coordinate system, calculate active heating power based on the first current in a rotor magnetic field direction and the second current in a direction perpendicular to the rotor magnetic field direction, and performs active heating according to the active heating power in response to the current electric drive system receiving the parking-standby efficiency-reduction heating instruction and the current electric drive system being in a predetermined available state; and a second control module configured to input a current look-up table concerning rotational speed into a predetermined efficiency-reduction rotational speed amplification module to obtain a target amplification coefficient, calculate target heating power based on a target current obtained from the target amplification coefficient, perform active heating according to the target heating power in response to the current electric drive system receiving the driving-state efficiency-reduction heating instruction and the current electric drive system being in the predetermined available state.

Further, the determination module is configured to: obtain a current rotational speed, a current torque, a current operation mode, a current motor stator temperature, a current motor rotor temperature, a current ambient temperature, and a current fault-diagnosis rank of the drive motor; identify a current efficiency reduction scenario of the current electric drive system according to the current rotational speed, the current torque, and the current operation mode; identify a safety status of the current electric drive system according to the current motor stator temperature, the current motor rotor temperature, the current ambient temperature, and the current fault-diagnosis rank; and determine that the current electric drive system receives the parking-standby efficiency-reduction heating instruction in response to the current efficiency reduction scenario being a parking-standby state scenario and the safety status being a safe power inverting state, and determine that the current electric drive system receives the driving-state efficiency-reduction heating instruction in response to the current efficiency reduction scenario being a drivable state scenario and the safety status being the safe power inverting state.

Further, for identifying the current efficiency reduction scenario of the current electric drive system according to the current rotational speed, the current torque, and the current operation mode, the determination module is configured to; determine whether an absolute value of the current rotational speed is smaller than or equal to the first predetermined rotational speed, whether the current torque is zero, and whether the current operation mode is the first predetermined high-voltage standby mode; and identify the current efficiency reduction scenario of the current electric drive system as the parking-standby state scenario, in response to the absolute value of the current rotational speed being smaller than or equal to the predetermined rotational speed, the current torque being zero, and the current operation mode being the first predetermined high-voltage standby mode.

Further, for identifying the current efficiency reduction scenario of the current electric drive system according to the current rotational speed, the current torque, and the current operation mode, the determination module is configured to, determine whether the absolute value of the current rotational speed is greater than the second predetermined rotational speed, whether the current operation mode is the second predetermined high-voltage standby mode; and identify the current efficiency reduction scenario of the current electric drive system as the drivable state scenario, in response to the absolute value of the current rotational speed being greater than the second predetermined rotational speed, and the current operation mode being the second predetermined high-voltage standby mode.

Further, for identifying the safety status of the current electric drive system according to the current motor stator temperature, the current motor rotor temperature, the current ambient temperature, and the current fault-diagnosis rank, ; the determination is configured to determine whether the current motor stator temperature is smaller than or equal to the first predetermined temperature, whether the current motor rotor temperature is smaller than or equal to the second predetermined temperature, whether the current ambient temperature is smaller than or equal to a third predetermined temperature, and whether the current fault-diagnosis rank is smaller than or equal to a predetermined controller power inverting faulty state; and identify the safety status of the current electric drive system as the safe power inverting state, in response to the current motor stator temperature being smaller than or equal to the first predetermined temperature, the current motor rotor temperature being smaller than or equal to the second predetermined temperature, the current ambient temperature being smaller than or equal to the third predetermined temperature, and the current fault-diagnosis rank being smaller than or equal to the predetermined controller power inverting faulty state.

Further, the first control module is further configured to, prior to said converting the predetermined motor mathematical model to the target rotation coordinate system, establish the target rotation coordinate system on a drive motor rotor. The rotor magnetic field direction is taken as the D axis, and a direction perpendicular to the rotor magnetic field direction is taken as the Q axis.

Embodiments of a third aspect of the present disclosure provide a vehicle. The vehicle includes a memory, a processor, and a computer program stored in the memory and executable on the processor. The processor executes the program to realize the active efficiency-reduction heating control method for the drive motor as described according to the above embodiments.

Embodiments of a fourth aspect of the present disclosure provide a computer-readable storage medium having a computer program stored thereon. The computer program, when executed by a processor, implements the active efficiency-reduction heating control method for the drive motor as described according to the above embodiments.

Therefore, the present disclosure provides the active efficiency-reduction heating control method for electric drive system, controls the thermal loss during energy conversion of the electric drive system. When heating requirements occur in components like a battery of the vehicle under vehicle parking, driving operation conditions and the like, the generated heat during operation of a motor system is utilized, and this part of heat is transferred to other parts of the vehicle through a waste heat recovery system, to realize autonomous heating. Meanwhile, conversion efficiency is actively reduced while ensuring that output capabilities (drive and power generation capabilities) remain unchanged through a modulation current control algorithm, to quantitatively output large heating power. When there are heat requirements from the battery, a passenger compartment, and other vehicle components, it is possible to efficiently output heat by cooperating with the thermal management system, satisfying diverse heating requirements, improving the vehicle energy consumption level, and enhancing the friendly travel experience.

Additional aspects and advantages of the present disclosure will be provided in part in the following description, or will become apparent in part from the following description, or can be learned from practicing of the present disclosure.

### BRIEF DESCRIPTION OF DRAWINGS

The above and/or additional aspects and advantages of the present disclosure will become apparent and readily understood from the following description of embodiments in conjunction with the accompanying drawings, in which:
FIG. 1 is a schematic flowchart illustrating an active efficiency-reduction heating control method for a drive motor according to an embodiment of the present disclosure.
FIG. 2 is a schematic diagram illustrating a principle of an active efficiency-reduction heating control method for a drive motor according to an embodiment of the present disclosure.
FIG. 3 is a schematic flowchart illustrating an active efficiency-reduction heating control method for a drive motor according to an embodiment of the present disclosure.
FIG. 4 is a schematic diagram of a current look-up table model according to an embodiment of the present disclosure.
FIG. 5 is a schematic diagram of a rotational-speed amplification coefficient module according to an embodiment of the present disclosure.
FIG. 6 is a schematic diagram illustrating an example of an active efficiency-reduction heating control apparatus for a drive motor according to an embodiment of the present disclosure.
FIG. 7 is a schematic structural diagram of a vehicle according to an embodiment of the present disclosure.

Description of reference numerals: 10-active efficiency-reduction heating control apparatus for a drive motor, 100-determination module, 200-first control module, 300-second control module, 701-memory, 702-processor, 703-communication interface.

### DESCRIPTION OF EMBODIMENTS

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain rather than limit the present disclosure.

An active efficiency-reduction heating control method and apparatus for a drive motor, a vehicle, and a medium according to the embodiments of the present disclosure are described below with reference to the drawings. To cope with problems of high product costs and low efficiency mentioned in the above background section, the present disclosure provides an active efficiency-reduction heating control method for a drive motor. In this method, in response to an electric drive system receiving a parking-standby efficiency-reduction heating instruction and being in a predetermined available state, a predetermined motor mathematical model is converted to a target rotation coordinate system, active heating power is calculated based on the first current in a rotor magnetic field direction and the second current in a direction perpendicular to the rotor magnetic field direction, and active heating is performed. Alternatively, in response to the electric drive system receiving a driving-state efficiency-reduction heating instruction and being in the predetermined available state, a look-up table concerning rotational speed is inputted into a predetermined efficiency-reduction rotational speed amplification module, and finally obtain a target amplification coefficient, to calculate target heating power based on a target current along with the target amplification coefficient, and active heating is performed. Therefore, the problems of the high product costs and low efficiency are solved, and a vehicle energy consumption level and a user travel experience are improved.

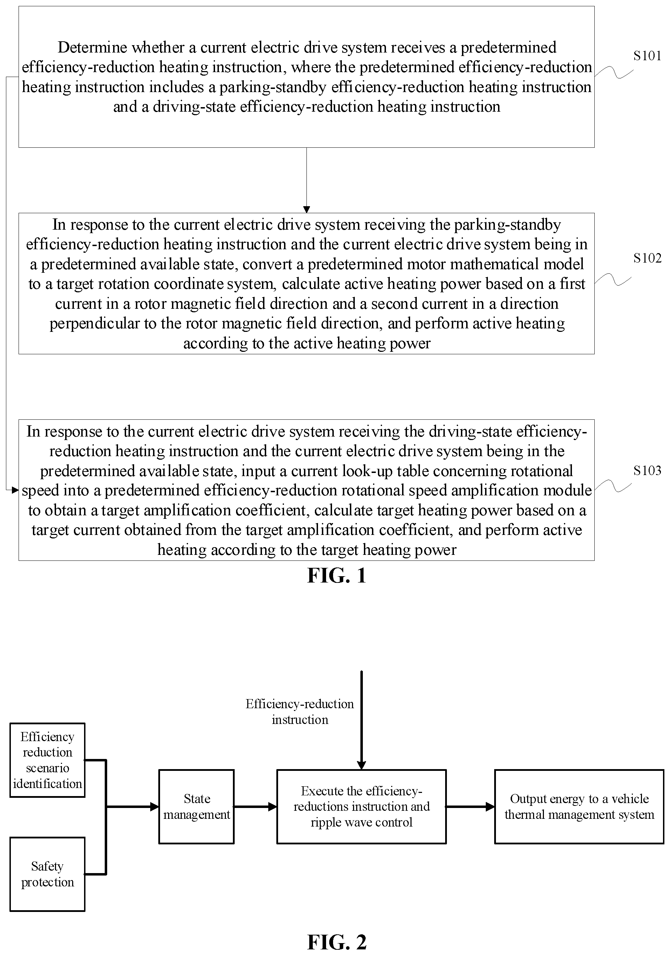

FIG. 1 is a schematic flowchart illustrating an active efficiency-reduction heating control method for a drive motor according to an embodiment of the present disclosure.

Before introducing the active efficiency-reduction heating control method for the drive motor according to the embodiments of the present disclosure, an operation principle thereof will be briefly introduced.

FIG. 2 is a schematic diagram illustrating a principle of an active efficiency-reduction heating control method for a drive motor according to an embodiment of the present disclosure, which includes the following, as illustrated in FIG. 2.
(1) Efficiency reduction scenario identification and state management, including the following steps 1) and 2).
   1) Determine that the electric driveline is currently in a parking-standby state or a drivable state based on conditions such as a current rotational speed of electric driveline, an execution torque, an operation mode, and a gear signal.
   2) Determine that the electric driveline is currently in a safe power inverting state on monitoring signals such as a current motor stator/rotor temperature of the electric driveline, an external ambient temperature (a safe temperature threshold boundary is obtained through actual tests), and an electric drive fault-diagnosis rank.

It needs to be noted that when the above conditions are satisfied concurrently, a parking-standby-state heating available flag bit or a driving-state heating available flag bit may be fed back to a controller area network (CAN).

(2) Efficiency reduction instruction execution, including: in response to receiving an efficiency reduction instruction transmitted by a thermal manager, executing, by a motor controller, an active efficiency reduction function in the case that the above-mentioned state flag bits indicate available states; and estimating actual heating power in real time according to a current heating state and a current heating intensity when there is a closed-loop control requirement or communication requirement.

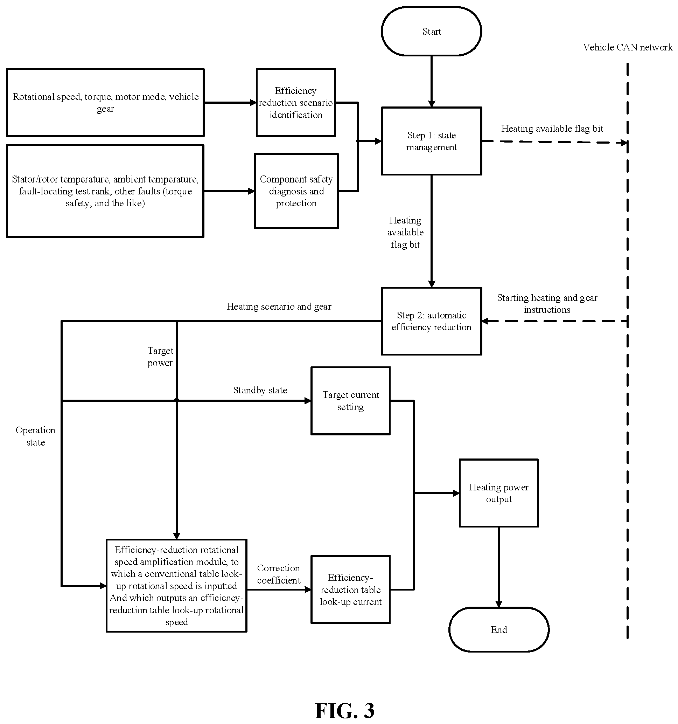

In an embodiment, in conjunction with FIG. 1 and FIG. 3, the active efficiency-reduction heating control method for the drive motor includes the following steps.

In step S101, determine whether a current electric drive system receives a predetermined efficiency-reduction heating instruction. The predetermined efficiency-reduction heating instruction includes a parking-standby efficiency-reduction heating instruction and a driving-state efficiency-reduction heating instruction.

The predetermined efficiency-reduction heating instruction is an efficiency-reduction heating instruction received by the motor controller for executing the active efficiency reduction function.

Further, in some embodiments, the details on determining whether the current electric drive system receives the predetermined efficiency-reduction heating instruction include: obtaining the current rotational speed, the current torque, the current operation mode, the current motor stator temperature, the current motor rotor temperature, the current ambient temperature, and the current fault-diagnosis rank of the drive motor; identifying the current efficiency reduction scenario of the current electric drive system according to the current rotational speed, the current torque, and the current operation mode, and identifying the safety status of the current electric drive system according to the current motor stator temperature, the current motor rotor temperature, the current ambient temperature, and the current fault-diagnosis rank; and determining that the current electric drive system receives the parking-standby efficiency-reduction heating instruction in response to the current efficiency reduction scenario being a parking-standby state scenario and the safety status being the safe power inverting state, and determining that the current electric drive system receives the driving-state efficiency-reduction heating instruction in response to the current efficiency reduction scenario being a drivable state scenario and the safety status being the safe power inverting state.

In an embodiment of the present disclosure, the efficiency reduction scenarios are determined by identifying whether a current electric-drive efficiency reduction scenario (EfiRePosn) is the parking-standby state scenario or the drivable state scenario based on conditions such as the current rotational speed (N), the execution torque (Tq), and the operation mode (OperMod) of the electric drive system. The safety status of the electric drive system, i.e., component safety diagnosis and protection, is identified through conditions such as the motor stator temperature, the motor rotor temperature, the external ambient temperature, and the fault-diagnosis rank of the electric drive system.

Further, in some embodiments, the details on identifying the current efficiency reduction scenario of the current electric drive system according to the current rotational speed, the current torque, and the current operation mode, include: determining whether an absolute value of the current rotational speed is smaller than or equal to the first predetermined rotational speed, whether the current torque is zero and whether the current operation mode is the first predetermined high-voltage standby mode; and identifying the current efficiency reduction scenario of the current electric drive system as the parking-standby state scenario in response to the absolute value of the current rotational speed being smaller than or equal to the predetermined rotational speed, the current torque being zero, and the current operation mode being the first predetermined high-voltage standby mode.

The first predetermined rotational speed and the first predetermined high-voltage standby mode are predetermined by a person skilled in the art, and their applications in actual engineering should be defined according to agreements.

For example, in the embodiment of the present disclosure, the first predetermined rotational speed is denoted as n₁, and the first predetermined high-voltage standby mode is set to 2 or 6. When the absolute value of the rotational speed Abs(P) ≤ n₁, the operation mode OperMod = 2 or 6, and the execution torque Tq = 0, the current electric-drive efficiency reduction scenario is identified as the parking-standby state scenario, and it is defined that EfiRePosn=1.

Further, in some embodiments, the details on identifying the current efficiency reduction scenario of the current electric drive system according to the current rotational speed, the current torque, and the current operation mode further, include: determining whether the absolute value of the current rotational speed is greater than the second predetermined rotational speed and whether the current operation mode is the second predetermined high-voltage standby mode; and identifying the current efficiency reduction scenario of the current electric drive system as the drivable state scenario in response to the absolute value of the current rotational speed being greater than the second predetermined rotational speed and the current operation mode being the second predetermined high-voltage standby mode.

The second predetermined rotational speed is predetermined by a person skilled in the art, and the second predetermined high-voltage standby mode is also predetermined by a person skilled in the art, and their applications in actual engineering should be defined according to agreements.

For example, in the embodiment of the present disclosure, the second predetermined rotational speed is denoted as n₂, and the second predetermined high-voltage standby mode is set to 6. When the absolute value of the rotational speed Abs(N) ≥ n₂ and the operation mode OperMod = 6, the current electric drive efficiency reduction scenario is identified as the drivable state scenario, and it is defined that EfiRePosn = 2.

Further, in some embodiments, the details on identifying the safety status of the current electric drive system according to the current motor stator temperature, the current motor rotor temperature, the current ambient temperature, and the current fault-diagnosis rank, include: determining whether the current motor stator temperature is smaller than or equal to the first predetermined temperature, whether the current motor rotor temperature is smaller than or equal to the second predetermined temperature, whether the current ambient temperature is smaller than or equal to a third predetermined temperature, and whether the current fault-diagnosis rank is smaller than or equal to a predetermined controller power inverting faulty state; and identifying the safety status of the current electric drive system as the safe power inverting state in response to the current motor stator temperature being smaller than or equal to the first predetermined temperature, the current motor rotor temperature being smaller than or equal to the second predetermined temperature, the current ambient temperature being smaller than or equal to the third predetermined temperature, and the current fault-diagnosis rank being smaller than or equal to the predetermined controller power inverting faulty state.

The first predetermined temperature and the second predetermined temperature are predetermined by a person skilled in the art. The third predetermined temperature is a safe temperature threshold tolerance and may be obtained through specific prototype design parameters and actual tests. The predetermined controller power inverting faulty state is also predetermined by a person skilled in the art.

For example, in an embodiment of the present disclosure, the first predetermined temperature is set to T₁, the second predetermined temperature is set to T₂, the third predetermined temperature is set to T₃, and the predetermined controller power inverting faulty state is set to n. When conditions that the stator temperature Tₛₐₜₒᵣ ≤ T₁, the rotor temperature Tₛₐₜₒᵣ ≤ T₂, the external ambient temperature T_{cv} ≤ T₃, and an electric drive fault-diagnosis rank (FltRank for short) ≤ n are satisfied, it is identified that the electric drive system is in the safe power inverting state, and it is defined that a component safety status SafeSt = 1, otherwise SafeSt = 0.

Based on the above conditions, when EfiRePosn = 1 and SafeSt = 1, it is defined that the standby-state heating available flag bit LockedHeatEnaFlag = 1, otherwise LockedHeatEnaFlag = 0. When EfiRePosn = 2 and SafeSt = 1, it is defined that the driving-state heating available flag bit RunstHeatEnaFlag = 1, otherwise RunstHeatEnaFlag = 0. Further, the parking-standby-state heating available flag bit or the driving-state heating available flag bit is fed back to the CAN network.

It should be noted that, for the parking-standby state scenario and the drivable state scenario, different protection thresholds may be set according to actual situations, the above thresholds are only examples for illustrative purposes only.

Further, for the case where there is no rotor temperature characterization signal or the case where a state of a motor heating model under a current operation condition is different from its conventional operation state, in response to assessing a possible thermal failure risk due to long-term operation of the motor, the accumulated heat at one of monitoring points may be observed and calculated as temperature protection schemes.

In step S102, in response to the current electric drive system receiving the parking-standby efficiency-reduction heating instruction and the current electric drive system being in a predetermined available state, convert a predetermined motor mathematical model to a target rotation coordinate system, calculate active heating power based on the first current in a rotor magnetic field direction and the second current in a direction perpendicular to the rotor magnetic field direction, and perform active heating according to the active heating power.

When the electric drive system receives the parking-standby efficiency-reduction heating instruction or the driving-state efficiency-reduction heating instruction, and provided that it can reach the corresponding state, the active heating is performed at given power while maintaining the very accurate torque request from a vehicle control unit (VCU) at the same time.

Further, in some embodiments, the method further includes, prior to the converting the predetermined motor mathematical model to the target rotation coordinate system: establishing the target rotation coordinate system on a drive motor rotor. The rotor magnetic field direction is taken as the D axis, and a direction perpendicular to the rotor magnetic field direction is taken as the Q axis.

In an embodiment, according to motor control principles, the rotation coordinate system is established on the motor rotor, where the rotor magnetic field direction is taken as the D axis, and the direction perpendicular to the rotor magnetic field direction is taken as the Q axis. Decoupling of the D axis and Q axis may be realized by low pass filters. The Q-axis current is an active component and drives the rotor to rotate. The D-axis current is a reactive component to excite or weaken the magnetic field, the latter is main reason of thermal energy generation at motor stator side, and therefore is a focus of active efficiency reduction. In this state, the requested torque Tq = 0, the rotational speed N ≈ 0, and electric energy is substantially converted into heat energy. At this time, given that the D-axis current Id = A₁, Iq = 0, i.e., there is no torque output, i.e., then the heat at corresponding power may be obtained.

It needs to be noted that a specific D-axis current Id should be obtained from actual tests or bench tests, thereby ensuring that the output heat power reaches its target.

In step S103, in response to the current electric drive system receiving the driving-state efficiency-reduction heating instruction and the current electric drive system being in the predetermined available state, input a current look-up table concerning rotational speed to a predetermined efficiency-reduction rotational speed amplification module to obtain a target amplification coefficient, calculate target heating power based on a target current obtained from the target amplification coefficient, and perform active heating according to the target heating power.

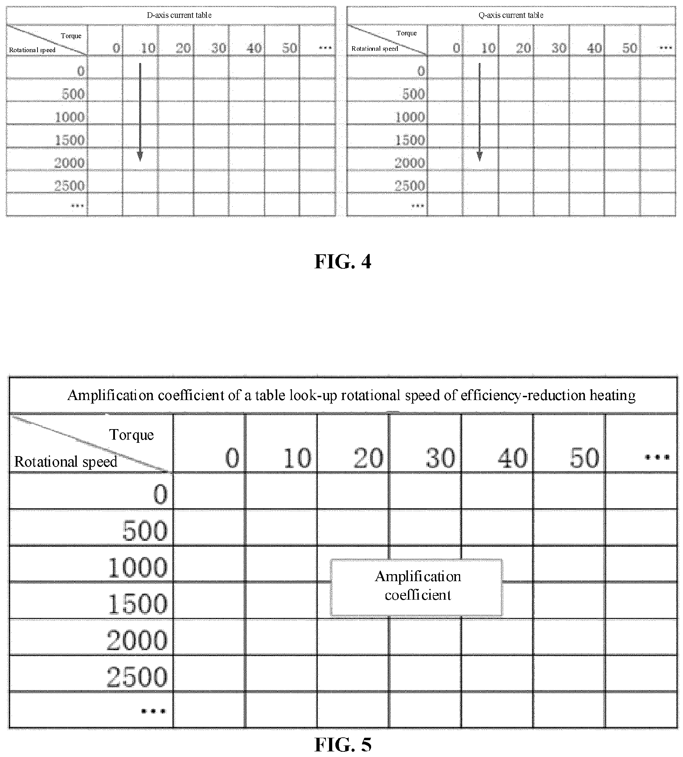

It can be inferred from the motor torque control principle that the torque is independent of the rotational speed. A schematic diagram of an existing current look-up table model in motor control is illustrated in FIG. 4, where a constant torque current curve is shown in a longitudinal axis direction of the diagram. When an effective heating instruction is received, drive motor running torque and oscillation speed remain unchanged. In this way, a higher control current may be obtained with reference to calibrated current look-up table while maintaining the output torque and mechanical power unchanged, thereby achieving a purpose of active efficiency-reduction heating. For example, when the current motor rotational speed is 500rpm, the requested torque is 10Nm, and a rotational speed amplification ratio is 2, a rotational speed is 500*2 = 1000rpm, which is used only as reference to look-up table, and the torque is still 10Nm.

The current look-up table model is fed with two reference signals, i.e., the rotational speed and torque, and a pair of Id, Iq current output may be obtained via look-up table operation. It needs to be noted that the current look-up table model is not limited to the model shown in FIG. 4. Other models may be used in the above manner, which is not described in detail here to avoid redundancy.

Further, based on the above principle, a special efficiency-reduction heating module is designed, via look-up table operation with reference to rotational-speed, heating power and target torque, compute amplification coefficient, as illustrated in FIG. 5, according to different real rotational speeds and torques, adjust the target Id, Iq current along with the amplification coefficient, so as to realize heat control at stable power under various operation conditions by regulating the current through PI or in other dynamic adjustment manners. The specific implementation and the amplification coefficient are each obtained through actual calibration tests.

It needs to be noted that for requirements of heating at a plurality of levels of an entire vehicle, it is only necessary to design and calibrate a plurality of sets of corresponding parameters based on the above method in combination with capabilities of the motor drive system.

With the active efficiency-reduction heating control method for the drive motor provided according to the embodiments of the present disclosure, in response to the electric drive system receiving the parking-standby efficiency-reduction heating instruction and the electric drive system being in the predetermined available state, the electric drive system converts the predetermined motor mathematical model to the target rotation coordinate system, calculates the active heating power based on the first current in the rotor magnetic field direction and the second current in the direction perpendicular to the rotor magnetic field direction, and performs active heating. Alternatively, in response to the electric drive system receiving the driving-state efficiency-reduction heating instruction and the electric drive system being in the predetermined available state, by referring to the current look-up table together with the predetermined efficiency-reduction rotational speed amplification module to finally obtain the target amplification coefficient, obtain the target current based on the target amplification coefficient, and the electric drive system performs active heating. Therefore, the problems of the high product costs and low efficiency are solved, and the vehicle energy consumption level and the friendly travel experience are improved.

Secondly, an active efficiency-reduction heating control apparatus for a drive motor provided according to the embodiments of the present disclosure is described with reference to the drawings below.

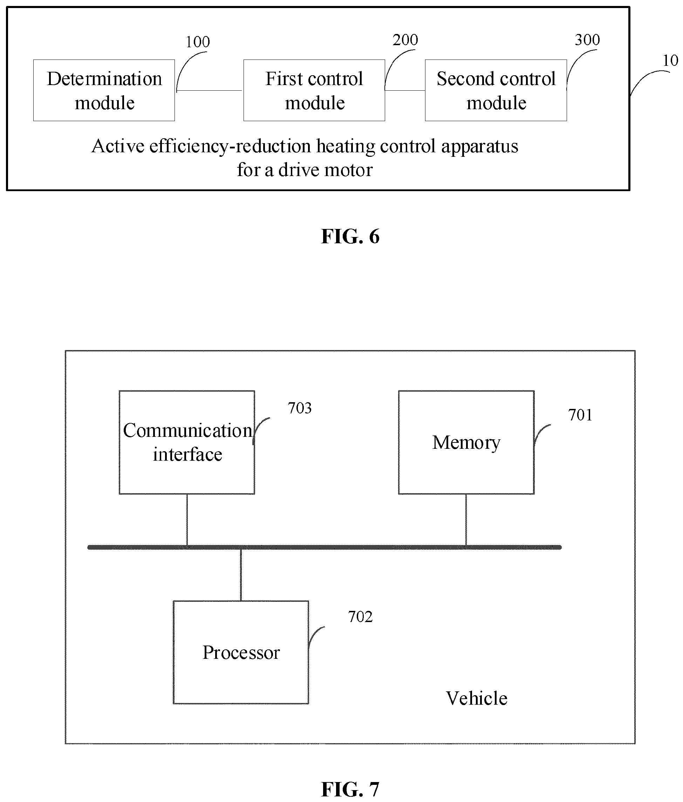

FIG. 6 is a block diagram of an active efficiency-reduction heating control apparatus for a drive motor according to an embodiment of the present disclosure.

As illustrated in FIG. 6, the active efficiency-reduction heating control apparatus 10 for the drive motor includes the determination module 100, the first control module 200, and the second control module 300.

The determination module 100 is configured to determine whether a current electric drive system receives a predetermined efficiency-reduction heating instruction. The predetermined efficiency-reduction heating instruction includes a parking-standby efficiency-reduction heating instruction and a driving-state efficiency-reduction heating instruction.

The first control module 200 is configured to convert a predetermined motor mathematical model to a target rotation coordinate system, to control active heating power based on the first current in a rotor magnetic field direction and the second current in a direction perpendicular to the rotor magnetic field direction, and perform active heating according to the active heating power in response to the current electric drive system receiving the parking-standby efficiency-reduction heating instruction and the current electric drive system being in a predetermined available state.

The second control module 300 is configured to input a current look-up table concerning rotational speed to a predetermined efficiency-reduction rotational speed amplification module to obtain a target amplification coefficient, control heating power based on a target current obtained from the target amplification coefficient, and perform active heating according to the target heating power in response to the current electric drive system receiving the driving-state efficiency-reduction heating instruction and the current electric drive system being in the predetermined available state.

Further, in some embodiments, the determination module 100 is configured to: obtain a current rotational speed, a current torque, a current operation mode, a current motor stator temperature, a current motor rotor temperature, a current ambient temperature, and a current fault-diagnosis rank of the drive motor; identify a current efficiency reduction scenario of the current electric drive system according to the current rotational speed, the current torque, and the current operation mode, and identify a safety status of the current electric drive system according to the current motor stator temperature, the current motor rotor temperature, the current ambient temperature, and the current fault-diagnosis rank; and determine that the current electric drive system receives the parking-standby efficiency-reduction heating instruction in response to the current efficiency reduction scenario being a parking-standby state scenario and the safety status being a safe power inverting state, and determine that the current electric drive system receives the driving-state efficiency-reduction heating instruction in response to the current efficiency reduction scenario being a drivable state scenario and the safety status being the safe power inverting state.

Further, in some embodiments, when identifying the current efficiency reduction scenario of the current electric drive system according to the current rotational speed, the current torque, and the current operation mode, the determination module 100 is configured to: determine whether an absolute value of the current rotational speed is smaller than or equal to the first predetermined rotational speed, whether the current torque is zero and whether the current operation mode is the first predetermined high-voltage standby mode; and identify the current efficiency reduction scenario of the current electric drive system as the parking-standby state scenario in response to the absolute value of the current rotational speed being smaller than or equal to the predetermined rotational speed, the current torque being zero, and the current operation mode being the first predetermined high-voltage standby mode.

Further, in some embodiments, when identifying the current efficiency reduction scenario of the current electric drive system according to the current rotational speed, the current torque, and the current operation mode, the determination module 100 is further configured to: determine whether the absolute value of the current rotational speed is greater than the second predetermined rotational speed and whether the current operation mode is the second predetermined high-voltage standby mode; and identify the current efficiency reduction scenario of the current electric drive system as the drivable state scenario in response to the absolute value of the current rotational speed being greater than the second predetermined rotational speed and the current operation mode being the second predetermined high-voltage standby mode.

Further, in some embodiments, when identifying the safety status of the current electric drive system according to the current motor stator temperature, the current motor rotor temperature, the current ambient temperature, and the current fault-diagnosis rank, the determination module 100 is configured to: determine whether the current motor stator temperature is smaller than or equal to the first predetermined temperature, whether the current motor rotor temperature is smaller than or equal to the second predetermined temperature, whether the current ambient temperature is smaller than or equal to a third predetermined temperature, and whether the current fault-diagnosis rank is smaller than or equal to a predetermined controller power inverting faulty state; and identify the safety status of the current electric drive system as the safe power inverting state in response to the current motor stator temperature being smaller than or equal to the first predetermined temperature, the current motor rotor temperature being smaller than or equal to the second predetermined temperature, the current ambient temperature being smaller than or equal to the third predetermined temperature, and the current fault-diagnosis rank being smaller than or equal to the predetermined controller power inverting faulty state.

Further, in some embodiments, the first control module 200 is further configured to prior to the converting the predetermined motor mathematical model to the target rotation coordinate system: establish the target rotation coordinate system on a drive motor rotor. The rotor magnetic field direction is taken as the D axis, and a direction perpendicular to the rotor magnetic field direction is taken as the Q axis.

It should be noted that the aforementioned explanation for the embodiments of the active efficiency-reduction heating control method for the drive motor is also applicable to the active efficiency-reduction heating control apparatus for the drive motor in this embodiment, and details are omitted herein.

With the active efficiency-reduction heating control apparatus for the drive motor provided according to the embodiments of the present disclosure, in response to the electric drive system receiving the parking-standby efficiency-reduction heating instruction and the electric drive system being in the predetermined available state, the electric drive system converts the predetermined motor mathematical model to the target rotation coordinate system, calculates the active heating power based on the first current in the rotor magnetic field direction and the second current in the direction perpendicular to the rotor magnetic field direction, and performs active heating. Alternatively, in response to the electric drive system receiving the driving-state efficiency-reduction heating instruction and the electric drive system being in the predetermined available state, the electric drive system inputs the current look-up table rotational speed to the predetermined efficiency-reduction rotational speed amplification module to obtain the target amplification coefficient, calculates the target heating power based on the target current obtained from the target amplification coefficient, and performs active heating. Therefore, the problems of the high product costs and low efficiency are solved, and the vehicle energy consumption level and the friendly travel experience are improved.

FIG. 7 is a schematic structural diagram of a vehicle according to an embodiment of the present disclosure. The vehicle may include a memory 701, a processor 702, and a computer program stored in the memory 701 and executable on the processor 702.

The processor 702, when executing the program, implements the active efficiency-reduction heating control method for the drive motor provided in the above embodiments.

Further, the vehicle further includes a communication interface 703 used for communication between the memory 701 and the processor 702.

The memory 701 is configured to store the computer program executable on the processor 702.

The memory 701 may include a high-speed random access memory (RAM) memory or a non-volatile memory, such as at least one magnetic disk memory.

When the memory 701, the processor 702, and the communication interface 703 are independently implemented, the communication interface 703, the memory 701, and the processor 702 are connectable to each other through a bus and communicate with each other. The bus may be an industry standard architecture (ISA) bus, a peripheral component (PCI) bus or an extended industry standard architecture (EISA) bus, or the like. The buses may be divided into address buses, data buses, control buses, and the like. For ease of representation, The bus is represented by only one bold line in FIG. 7, but it does not mean that there is only one bus or one type of bus.

In an embodiment, in a specific implementation, when the memory 701, the processor 702, and the communication interface 703 are integrated on one chip, the memory 701, the processor 702, and the communication interface 703 may perform communication with each other through an internal interface.

The processor 702 may be a central processing unit (CPU), an application specific integrated circuit (ASIC), or one or more integrated circuits configured to implement the embodiments of the present disclosure.

The embodiments of the present disclosure further provide a computer-readable storage medium having a computer program stored thereon. The program, when executed by a processor, implements the active efficiency-reduction heating control method for the drive motor as described above.

In descriptions of the present disclosure, descriptions with reference to the terms "an embodiment", "some embodiments", "examples", "specific examples", or "some examples" etc., mean that specific features, structure, materials, or characteristics described in conjunction with the embodiments or examples are included in at least one embodiment or example of the present disclosure. In this specification, the schematic representations of the above terms do not necessarily refer to the same embodiment or example. Moreover, the described specific features, structures, materials or characteristics may be combined in any one or N embodiments or examples in a suitable manner. In addition, those skilled in the art can combine the different embodiments or examples and the features of the different embodiments or examples described in this specification without contradicting each other.

In addition, terms such as "first" and "second" are used herein for purposes of description and are not to be understood as indicating or implying relative importance or as implicitly indicating a quantity of technical features indicated. Therefore, the features associated with "first" and "second" may explicitly or implicitly include at least one of the features. In the description of the present disclosure, "N" means at least two, such as two, three, etc., unless otherwise specifically defined.

Any process or method described in the flowchart or described in other manners herein can be understood as a module, segment or part of codes that include one or N executable instructions for implementing steps of specific logical functions or processes. It can be appreciated by those skilled in the art that the scope of the preferred embodiments of the present disclosure includes additional implementations where functions may not be performed in the order as shown or discussed, including implementations where the involved functions are performed substantially in parallel or even in a reverse order.

It can be appreciated that each part of the present disclosure can be implemented in hardware, software, firmware or any combination thereof. In the above implementations, N steps or methods can be implemented using software or firmware stored in a memory and executed by a suitable instruction execution system. For example, when implemented in hardware, as in another embodiment, it can be implemented by any one or combination of the following technologies known in the art: a discrete logic circuit having logic gate circuits for implementing logic functions on data signals, an application-specific integrated circuit with suitable combined logic gates, a programmable gate array, a field programmable gate array, etc.

It can be appreciated by those skilled in the art that all or some of the steps in the methods of the above embodiments can be implemented by relevant hardware following instructions of a program. The program can be stored in a computer-readable storage medium, and the program, when executed, implements any one or combination of the steps of the method embodiments.

Although the embodiments of the present disclosure have been shown and described above, it should be understood that the above-mentioned embodiments are exemplary and should not be construed as limiting the present disclosure. For those of ordinary skill in the art, changes, alternatives, and modifications can be made to the above-mentioned embodiments within the scope of the present disclosure.

## Claims

1. An active efficiency-reduction heating control method for a drive motor, comprising:
determining whether a current electric drive system receives a predetermined efficiency-reduction heating instruction, wherein the predetermined efficiency-reduction heating instruction comprises a parking-standby efficiency-reduction heating instruction and a driving-state efficiency-reduction heating instruction;
in response to the current electric drive system receiving the parking-standby efficiency-reduction heating instruction and the current electric drive system being in a predetermined available state, converting a predetermined motor mathematical model to a target rotation coordinate system, calculating active heating power based on a first current in a rotor magnetic field direction and a second current in a direction perpendicular to the rotor magnetic field direction, and performing active heating according to the active heating power; and
in response to the current electric drive system receiving the driving-state efficiency-reduction heating instruction and the current electric drive system being in the predetermined available state, inputting a current look-up table concerning rotational speed into a predetermined efficiency-reduction rotational speed amplification module to obtain a target amplification coefficient, calculating target heating power based on a target current obtained from the target amplification coefficient, and performing active heating according to the target heating power.

2. The method according to claim 1, wherein said determining whether the current electric drive system receives the predetermined efficiency-reduction heating instruction comprises:
obtaining a current rotational speed, a current torque, a current operation mode, a current motor stator temperature, a current motor rotor temperature, a current ambient temperature, and a current fault-diagnosis rank of the drive motor;
identifying a current efficiency reduction scenario of the current electric drive system according to the current rotational speed, the current torque, and the current operation mode, and identifying a safety status of the current electric drive system according to the current motor stator temperature, the current motor rotor temperature, the current ambient temperature, and the current fault-diagnosis rank; and
determining that the current electric drive system receives the parking-standby efficiency-reduction heating instruction in response to the current efficiency reduction scenario being a parking-standby state scenario and the safety status being a safe power inverting state, and determining that the current electric drive system receives the driving-state efficiency-reduction heating instruction in response to the current efficiency reduction scenario being a drivable state scenario and the safety status being the safe power inverting state.

3. The method according to claim 2, wherein said identifying the current efficiency reduction scenario of the current electric drive system according to the current rotational speed, the current torque, and the current operation mode comprises:
determining whether an absolute value of the current rotational speed is smaller than or equal to a first predetermined rotational speed, determining whether the current torque is zero, and determining whether the current operation mode is a first predetermined high-voltage standby mode; and
identifying the current efficiency reduction scenario of the current electric drive system as the parking-standby state scenario in response to the absolute value of the current rotational speed being smaller than or equal to the predetermined rotational speed, the current torque being zero, and the current operation mode being the first predetermined high-voltage standby mode.

4. The method according to claim 3, wherein said identifying the current efficiency reduction scenario of the current electric drive system according to the current rotational speed, the current torque, and the current operation mode further comprises:
determining whether the absolute value of the current rotational speed is greater than a second predetermined rotational speed and whether the current operation mode is a second predetermined high-voltage standby mode; and
identifying the current efficiency reduction scenario of the current electric drive system as the drivable state scenario in response to the absolute value of the current rotational speed being greater than the second predetermined rotational speed and the current operation mode being the second predetermined high-voltage standby mode.

5. The method according to claim 2, wherein said identifying the safety status of the current electric drive system according to the current motor stator temperature, the current motor rotor temperature, the current ambient temperature, and the current fault-diagnosis rank comprises:
determining whether the current motor stator temperature is smaller than or equal to a first predetermined temperature, whether the current motor rotor temperature is smaller than or equal to a second predetermined temperature, whether the current ambient temperature is smaller than or equal to a third predetermined temperature, and whether the current fault-diagnosis rank is smaller than or equal to a predetermined controller power inverting faulty state; and
identifying the safety status of the current electric drive system as the safe power inverting state in response to the current motor stator temperature being smaller than or equal to the first predetermined temperature, the current motor rotor temperature being smaller than or equal to the second predetermined temperature, the current ambient temperature being smaller than or equal to the third predetermined temperature, and the current fault-diagnosis rank being smaller than or equal to the predetermined controller power inverting faulty state.

6. The method according to claim 1, further comprising, prior to said converting the predetermined motor mathematical model to the target rotation coordinate system:
establishing the target rotation coordinate system on a drive motor rotor, wherein the rotor magnetic field direction is taken as a direct axis, and a direction perpendicular to the rotor magnetic field direction is taken as a quadratic axis.

7. An active efficiency-reduction heating control apparatus for a drive motor, comprising:
a determination module configured to determine whether a current electric drive system receives a predetermined efficiency-reduction heating instruction, wherein the predetermined efficiency-reduction heating instruction comprises a parking-standby efficiency-reduction heating instruction and a driving-state efficiency-reduction heating instruction;
a first control module configured to, in response to the current electric drive system receiving the parking-standby efficiency-reduction heating instruction and the current electric drive system being in a predetermined available state, convert a predetermined motor mathematical model to a target rotation coordinate system, calculate active heating power based on a first current in a rotor magnetic field direction and a second current in a direction perpendicular to the rotor magnetic field direction, and perform active heating according to the active heating power; and
a second control module configured to, in response to the current electric drive system receiving the driving-state efficiency-reduction heating instruction and the current electric drive system being in the predetermined available state, input a current look-up table concerning rotational speed to a predetermined efficiency-reduction rotational speed amplification module to obtain a target amplification coefficient, calculate target heating power based on a target current obtained from the target amplification coefficient, and perform active heating according to the target heating power.

8. The apparatus according to claim 7, wherein the determination module is configured to:
obtain a current rotational speed, a current torque, a current operation mode, a current motor stator temperature, a current motor rotor temperature, a current ambient temperature, and a current fault-diagnosis rank of the drive motor;
identify a current efficiency reduction scenario of the current electric drive system according to the current rotational speed, the current torque, and the current operation mode, and identify a safety status of the current electric drive system according to the current motor stator temperature, the current motor rotor temperature, the current ambient temperature, and the current fault-diagnosis rank; and
determine that the current electric drive system receives the parking-standby efficiency-reduction heating instruction in response to the current efficiency reduction scenario being a parking-standby state scenario and the safety status being a safe power inverting state, and determine that the current electric drive system receives the driving-state efficiency-reduction heating instruction in response to the current efficiency reduction scenario being a drivable state scenario and the safety status being the safe power inverting state.

9. The apparatus according to claim 8, wherein the determination module being configured to identify the current efficiency reduction scenario of the current electric drive system according to the current rotational speed, the current torque, and the current operation mode comprises the determination module being configured to:
determine whether an absolute value of the current rotational speed is smaller than or equal to a first predetermined rotational speed, determine whether the current torque is zero and determine whether the current operation mode is a first predetermined high-voltage standby mode; and
identify the current efficiency reduction scenario of the current electric drive system as the parking-standby state scenario in response to the absolute value of the current rotational speed being smaller than or equal to the predetermined rotational speed, the current torque being zero, and the current operation mode being the first predetermined high-voltage standby mode.

10. The apparatus according to claim 9, wherein the determination module being configured to identify the current efficiency reduction scenario of the current electric drive system according to the current rotational speed, the current torque, and the current operation mode comprises the determination module being configured to:
determine whether the absolute value of the current rotational speed is greater than a second predetermined rotational speed and whether the current operation mode is a second predetermined high-voltage standby mode; and
identify the current efficiency reduction scenario of the current electric drive system as the drivable state scenario in response to the absolute value of the current rotational speed being greater than the second predetermined rotational speed and the current operation mode being the second predetermined high-voltage standby mode.

11. The apparatus according to claim 8, wherein the determination module being configured to identify the safety status of the current electric drive system according to the current motor stator temperature, the current motor rotor temperature, the current ambient temperature, and the current fault-diagnosis rank comprises the determination module being configured to:
determine whether the current motor stator temperature is smaller than or equal to a first predetermined temperature, whether the current motor rotor temperature is smaller than or equal to a second predetermined temperature, whether the current ambient temperature is smaller than or equal to a third predetermined temperature, and whether the current fault-diagnosis rank is smaller than or equal to a predetermined controller power inverting faulty state; and
identify the safety status of the current electric drive system as the safe power inverting state in response to the current motor stator temperature being smaller than or equal to the first predetermined temperature, the current motor rotor temperature being smaller than or equal to the second predetermined temperature, the current ambient temperature being smaller than or equal to the third predetermined temperature, and the current fault-diagnosis rank being smaller than or equal to the predetermined controller power inverting faulty state.

12. The apparatus according to claim 7, wherein the first control module is further configured to, prior to said converting the predetermined motor mathematical model to the target rotation coordinate system:
establish the target rotation coordinate system on a drive motor rotor, wherein the rotor magnetic field direction is taken as a direct axis, and a direction perpendicular to the rotor magnetic field direction is taken as a quadratic axis.

13. A vehicle, comprising:
a memory;
a processor; and
a computer program stored in the memory and executable on the processor, wherein the processor, when executing the program, implements the active efficiency-reduction heating control method for the drive motor according to any one of claims 1 to 6.

14. A computer-readable storage medium, having a computer program stored thereon, wherein the computer program, when executed by a processor, implements the active efficiency-reduction heating control method for the drive motor according to any one of claims 1 to 6.
